# EUROPEAN PATENT SPECIFICATION

(11) **EP 0 375 023 B1**
(45) Date of publication and mention of the grant of the patent: **31.03.1993**
(21) Application number: 89203147.7
(22) Date of filing: 08.12.1989
(51) Int. Cl.: B65G 47/61

(54) **Installation for transferring articles from a first conveyor to a second conveyor**
Übergabevorrichtung für Gegenstände von einem ersten Förderer an einen zweiten Förderer
Installation de transfert d'articles d'un transporteur vers un autre

(30) Priority: 12.12.1988 NL 8803044
(43) Date of publication of application: 27.06.1990
(73) Proprietor: PROMECH SORTING SYSTEMS B.V., 2031 CW Haarlem (NL)
(72) Inventor: Geerts,Johannes Gerhardus Christianus, NL-2116 VH Bentveld (NL)
(74) Representative: Mommaerts, Johan Hendrik, Dipl.-Phys.

(56) References cited:
- BE-A- 528 496
- DE-A- 2 340 806
- NL-A- 7 008 371

## Description

The invention relates to an installation for sorting articles, for example articles of clothing, each of which is carried by a hook-shaped hanger, which installation is constructed of at least a primary conveyor, consisting of a continuous conveyor element, such as a cable or chain provided with a drive, which element traverses a closed track and is provided at regular intervals with a claw which can be actuated and in which a said hanger can be taken up, at least one ejection station being located along said track.

Netherlands Patent Application NL-A-7008371 discloses an installation of this type in which, for example, goods hung on clothes hangers can be ejected at selected locations for further distribution. See for the prior art also DE-A-2 340 806.

If it is desired to employ a large number of ejection stations, this means that the track of the primary conveyor can reach an appreciable length. Under such circumstances it is useful to instal the desired ejection stations along branches of the primary conveyor, so that a number of ejection stations can be operative at the same time, by which means it is possible not only to restrict the length of the primary conveyor but also to carry out the sorting of the articles within a shorter period of time.

These features can be realized in the installation according to the invention in that at least one secondary conveyor which has claws and moves in a different track then the driven primary conveyor, a bridging element driven synchronously with the primary conveyor being located between the claw tracks of these conveyors close to a said ejection station, which bridging element is provided with a take-up end under the primary conveyor and a discharge end which is at the height of the claws of the secondary conveyor, the claw-track parts of the conveyors which are situated between the take-up end and the discharge end of the bridging element being at a short distance to each other relative to the distance between the take-up end and the discharge end of the bridging element.

As a result of these measures, a pre-selection of the articles taken up in the primary conveyor can take place, so that some of these articles can be discharged to a secondary conveyor for final sorting in this secondary conveyor. This results in a great saving in time in the circulation time of the primary conveyor. The sorting capacity of the entire installation is increased significantly as a result.

In the proposed new installation it is important that the bridging element moves synchronously with the primary conveyor in order thus to preclude any possibility of blockages occurring. In an advantageous embodiment of the proposed new sorting installation a continuous auxiliary belt provided with catches which can interact with passing claws of the primary conveyor can be provided for this purpose along the section of the track of the primary conveyor at the location of the ejection station associated with the bridging element, there being a positive transmission between the auxiliary belt and the bridging element in order to guarantee the synchronous drive connection between the primary conveyor and this bridging element. The word "positive" is intended as the English equivalent of the typical German term "formschlüssig".

The invention will be illustrated in more detail with the aid of the drawing, which shows schematically an embodiment of the sorting installation.

Fig. 1 is a greatly simplified plan view of the entire installation.

Fig. 2 shows, on an enlarged scale, a plan view of the section A of the track of the primary conveyor at the location of an ejection station.

Fig. 3 is a side view of the track section from Fig. 2.

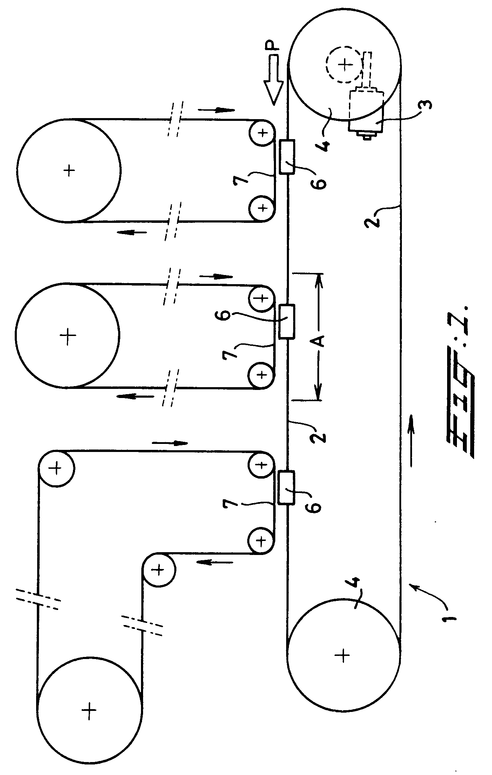

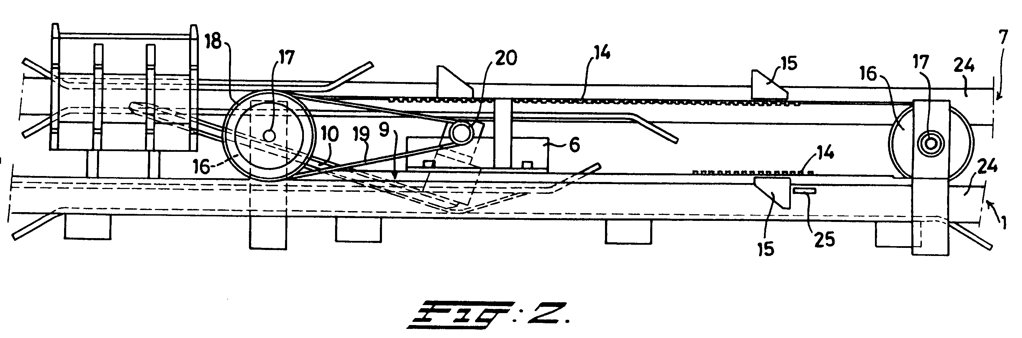

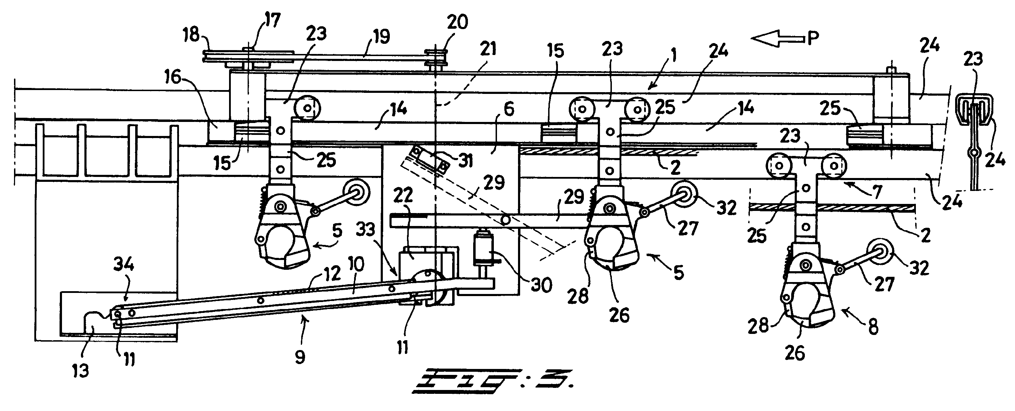

The sorting installation, the most important parts of which can be seen in Fig. 1, is constructed of a primary conveyor 1 which, in a manner as disclosed in Netherlands Patent Application 7008371, consists of a continuous conveyor element 2, such as a cable or chain, provided with a drive 3. The continuous conveyor element 2 traverses a closed track, employing two reversing wheels 4. The track section shown in Fig. 2 and 3 is indicated by A in Fig. 1. The conveyor element 2 is provided at regular intervals with a claw 5 (see Fig. 3) which can be actuated and in which a hook-shaped hanger (for example of the clothes hanger type) can be taken up. Along the said track of the primary conveyor 1 there are a number of ejection stations 6 which can be actuated by the passing articles or hangers to open the relevant claw and eject the hanger with the article. This is effected by each hanger or article being given a code, while a reader for this code is fitted in each ejection station, these features being as described in the repeatedly cited earlier Patent Application NL-A-7008371. The direction of movement of the claws 5 and 8 is indicated by the arrow P.

A number of secondary conveyors 7 which have claws 8 and move in another track (see also Fig. 3) are located a short distance away from the conveyor 1. A bridging element 9 driven synchronously with the primary conveyor is located between these conveyors 1 and 7, specifically close to an ejection station 6. This bridging element is constructed as a continuous belt 10 with a toothed outer surface. This belt 10 is fed over two reversing wheels 11 with a horizontal axis of rotation, so that the toothing of the effective upper part 12 faces upwards. The belt 10 traverses a downwardly sloping distance between, on the one hand, a take-up end under the primary conveyor 1 and a discharge end which is above the height of the claws 8 of the secondary conveyor 7. In this way the hangers (with the relevant article) collected from the opened claws 5 of the primary conveyor 1 can be delivered to a rest location or departure point 13. In this connection it is essential that this rest location 13 is located in the movement track of the claws 8 of the secondary conveyor 7.

It will be clear that the bridging element 9 constitutes the essential connecting element between the primary and the secondary conveyor and that the movement of this bridging element must keep pace with the primary conveyor in order to convey each collected hanger, with article, from the primary conveyor at the same speed to the first arriving claw 8 of the secondary conveyor 7. This synchronization is effected with the aid of a continuous auxiliary belt 14 which is fitted along the track section A of the primary conveyor 1 at the location of the ejection station 6. This auxiliary belt 14, which does not have its own drive, is provided with catches 15 which can interact with passing claws 5 of the primary conveyor 1. This auxiliary belt 14, which is provided with toothing on the inside, interacts with two reversing wheels 16, as a result of which there can be no slip. A pulley 18 is fixed to the vertical shaft 17 of one of the reversing wheels 16 to interact with an internally toothed belt 19 to drive a pinion 20. The occurrence of slip is precluded in this transmission 17-20 also. The pinion 20 is fastened on a vertical shaft 21 which in the downwards direction leads to a transmission 22, which is set square and is not detailed further, for one of the reversing wheels 11 of the continuous belt 10. There is thus a positive transmission 15 - 22 between the auxiliary belt 14 and the bridging element 9 in order to guarantee the intended synchronous or slip-free drive connection between the primary conveyor 1 and this bridging element.

The ejection station 6 is operated in a manner which has already been described in the repeatedly cited earlier patent application NL-A-7008371. Each claw 5 or 8 is suspended on a trolley 23 which is guided in a tube profile 24 which is of reversed U-shape and is provided with a slot in the bottom wall to permit the passage of the suspension 25 between the trolley 23 and the claw 5 or 8. The conveyor element (the cable 2) is also clamped in this suspension 25. Each claw 5 or 8 is provided with a bottom jaw 26 which can be folded away with the aid of a lever 27. The access to the claw 5 or 8 is closed by a lip 28 which can hinge inwards against spring force. A tiltable strip 29, which is horizontal in the rest position (see fig. 3), is located in each ejection station 6. When the ejection station 6 receives a signal that a hanger or article has been taken up in an approaching claw 5 or 8, a pneumatic ejector 30 comes into operation and the strip 29 comes into the sloping position shown by dotted lines and is held in this position by a holding magnet 31. When a claw passes, the pulley 32 of the lever 27 comes into contact with the strip 27 and is turned by this so that the jaw 26 folds away and the claw 5 opens, as a result of which the hanger, with the article, is ejected by gravity. The tilting of the lever 27 is restricted, so that, during the further movement of the claw 5, the pulley 32 pulls the strip 29 away from the holding magnet 31 so that it falls back into its horizontal position.

The opening of the claw 5 takes place at a location just above the take-up end 33 of the bridging element 9. The hanger ejected is then transported by the continuous belt 10 to the discharge end 34 of the element 9. Here the hanger is delivered to the rest location 13 which is located in the movement track of the claws 8 of the secondary conveyor 7. As soon as the first claw 8 to arrive passes this point, the lip 28 of the claw 8 impinges on the hanger and deflects inwards, so that the jaw 26 can scoop up the hanger for further transport in the track of the secondary conveyor 7.

In this way a pre-selected number of hangers, with articles, from the primary conveyor 1 can be transferred to one of the many secondary conveyors 7 for final definitive sorting there for further dispatch in a great variety of collections of these articles to the consumer or customer. With the aid of the coding of each hanger and/or article, which has also already been described in the earlier Patent Application 7008371, the pre-selection can be effected in the track of the primary conveyor 1 and the definitive sorting out in one or more of the secondary conveyors 7.

It is pointed out that in the embodiment shown the bridging element 9 is described as a continuous belt 10 provided with a toothed outer surface. However, it is also conceivable to use a worm instead of this belt, the said worm then likewise being driven by the right-angled transmission 22, synchronously with the movement of the primary conveyor 1.

## Claims

1. Installation for sorting articles, for example articles of clothing, each of which is carried by a hook-shaped hanger, which installation is constructed of at least a primary conveyor (1), consisting of a continuous conveyor element, such as a cable or chain provided with a drive, which element traverses a closed track and is provided at regular intervals with a claw which can be actuated and in which a said hanger can be taken up, at least one ejection station being located along said track, characterized in that at least one secondary conveyor (7) which has claws (8) and moves in a different track then the driven primary conveyor (1), a bridging element (9) driven synchronously with the primary conveyor being located between the claw-tracks of these conveyors (1,7) close to a said ejection station (6), which bridging element is provided with a take-up end (33) under the primary conveyor (1) and a discharge end (34) which is at the height of the claws (8) of the secondary conveyor (7), the claw-track parts of the conveyors which are situated between the take-up end (33) and the discharge end (34) of the bridging element (9) being at a short distance to each other relative to the distance between the take-up end (33) and the discharge end (34) of the bridging element (9).

2. Sorting installation according to Claim 1, characterized in that a continuous auxiliary belt (14) provided with catches (15) which can interact with passing claws (5) of the primary conveyor (1) is provided along the section of the track (A) of the primary conveyor (1) at the location of the ejection station (6) associated with the bridging element (9) and in that a positive transmission (15-22) is located between the auxiliary belt (14) and the bridging element (9) to guarantee the synchronous drive connection between the primary conveyor and said bridging element.

3. Conveyor installation according to Claim 1 or 2, characterized in that the bridging element (9) is constructed as a continuous belt (10) with a toothed outer surface, which belt is passed over two reversing wheels (11) with a horizontal axis of rotation and in that the effective upper part (12) of the belt traverses a downwardly sloping distance and delivers the hangers collected from the opened claws (5) of the primary conveyor (1) to a rest location (13) located in the movement track of the claws (8) of the secondary conveyor (7).

## Patentansprüche

1. Sortiervorrichtung für Gegenstände wie Kleidungsartikel, von denen jeder von einem hakenförmigen Aufhänger gefördert wird, zumindest umfassend einen ersten Förderer (1) bestehend aus einem fortlaufenden Förderelement wie einem bzw. einer mit einem betrieb versehenen Kabel oder Kette, das sich in einer geschlossenen Laufbahn bewegt und in regelmäßigen Abständen mit einer aktivierbaren Kralle für die Aufnahme eines der genannten Aufhängers versehen ist, wobei zumindest eine in derselben Laufbahn gelegene Auswurfstation vorgesehen ist, gekennzeichnet durch wenigstens einen zweiten mit Krallen (8) versehenen Förderer (7), der sich entlang einer anderen Laufbahn bewegt als der erste, mit Antrieb versehene Förderer (1), ein synchron zum ersten Förderer (1,7) angetriebenes Überbrückungselement (9), das sich zwischen den Krallenlaufbahnen der Förderer (1,7) in der Nähe der Auswurfstation (6) befindet und das mit einem Aufnahmeende (33) unterhalb des ersten Förderers (1) und einem Entladeende (34) auf der Höhe der Krallen (8) des zweiten Förderers (7) versehen ist, wobei die Teile der Krallenlaufbahn der Förderer, die sich zwischen dem Aufnahmeende (33) und dem Entladeende (34) des Überbrückungselementes (9) befinden, in einem geringen Abstand voneinander angeordnet sind, relativ zu dem Abstand zwischen dem Aufnahmeende (33) und dem Entladeende (34) des Überbrückungselementes (9).

2. Sortiervorrichtung nach Anspruch 1, dadurch gekennzeichnet, daß sie entlang des Bahnabschnitts (A) des ersten Förderers (1) im Bereich der Auswurfstation (6) ein dem Überbrückungselement zugeordnetes und mit Sperren (15) versehenes fortlaufendes Hilfsband (14) aufweist, wobei die Sperren und die vorbeikommenden Krallen (5) des ersten Förderers (1) miteinander zusammenwirken können, und daß zwischen dem Hilfsband (14) und dem Überbrückungselement (9) eine formschlüssige Transmission (15-22) gegeben ist, welche die synchrone Antriebsverbindung zwischen dem ersten Förderer und dem Überbrückungselement gewährleistet.

3. Fördervorrichtung nach Anspruch 1 oder 2, dadurch gekennzeichnet, daß das Überbrückungselement (9) als endloses Band (10) mit gezahnter Außenfläche ausgebildet ist, das über zwei Umlenkräder (11) mit horizontaler Rotationsachse geleitet wird, und daß der wirksame obere Teil (12) des Bandes über eine nach unten geneigte Strecke verläuft und die aus den geöffneten Krallen (5) des ersten Förderers (1) aufgenommenen Aufhänger zu einer in der Laufbahn der Krallen (8) des zweiten Förderers (7) gelegenen Wartestation (13) befördert.

## Revendications

1. Installation pour trier des articles, par exemple des articles de vêtements dont chacun est porté par un dispositif de suspension recourbé en crochet, installation qui est constituée d'au moins un convoyeur primaire (1), comprenant un élément convoyeur continu tel qu'un câble ou une chaîne muni d'un mécanisme d'entrainement, lequel élément parcourt une piste fermée et est muni à intervalles réguliers d'une griffe qui peut être actionnée et dans laquelle ledit dispositif de suspension peut être reçu,et d'au moins une station d'éjection (6) située le long de ladite piste, caractérisée par au moins un convoyeur secondaire (7) qui comporte des griffes (8) et se déplace selon une piste différente de celle du convoyeur primaire (1) , et un élément de liaison (9) entraîné de façon synchrone au convoyeur primaire, situé entre les pistes à griffes de ces convoyeurs (1,7) près de ladite station d'éjection (6), lequel élément de liaison est muni d'une extrémité de réception (33) sous le convoyeur primaire (1) et une extrémité de décharge (34) qui est à la hauteur des griffes (8) du convoyeur secondaire (7), les parties des pistes à griffes des convoyeurs qui sont situées entre l'extrémité de réception (33) et l'extrémité de décharge (34) de l'élément de liaison (9) étant à une courte distance l'une de l'autre par rapport à la distance entre l'extrémité de réception (33) et l'extrémité de décharge (34) de l'élément de liaison (9).

2. Installation de tri selon la revendication 1, caractérisée en ce qu'une courroie auxiliaire continue (14) munie de pattes (15) qui peuvent interagir avec les griffes passantes (5) du convoyeur primaire (1) est prévue le long de la section de la piste (A) du convoyeur primaire au niveau de l'emplacement de la station d'éjection (6) associée avec l'élément de liaison (9) et en ce qu'un moyen de transmission direct (15-22) est situé entre la courroie auxiliaire (14) et l'élément de liaison (9) pour garantir la connexion d'entrainement synchrone entre le convoyeur primaire et ledit élément de liaison.

3. Installation de convoyeurs selon la revendication 1 ou 2, caractérisée en ce que l'élément de liaison (9) est constitué d'une courroie continue (10) ayant une surface extérieure dentée, laquelle courroie passe sur deux roues de renversement (11) ayant un axe horizontal de rotation et en ce que la partie supérieure effective (12) de la courroie décrit une distance en pente dirigée vers le bas et délivre les dispositifs de suspension collectés à partir des griffes ouvertes (5) du convoyeur primaire (1) vers une position de repos (13) ,située dans la piste de déplacement des griffes (8) du convoyeur secondaire (7) .
